# EUROPEAN PATENT APPLICATION

(11) **EP 4 618 317 A1**
(43) Date of publication of application: **17.09.2025**
(21) Application number: 25154525.7
(22) Date of filing: 28.01.2025
(51) Int. Cl.: H01R 13/11, B60L 53/16, H01R 13/24, H01R 13/453

(54) **CONNECTOR**

(30) Priority: 11.03.2024 JP 2024037313
(71) Applicant: Japan Aviation Electronics Industry, Limited, Tokyo 150-0043 (JP)
(72) Inventor: KUGO, Kazuki, Tokyo, 150-0043 (JP)
(74) Representative: Prüfer & Partner mbB Patentanwälte · Rechtsanwälte

(57) **Abstract**

A connector is provided with a terminal and a regulation member. The connector has an accommodation portion which accommodates a mating terminal along a predetermined direction. The terminal has spring portions and a joining portion which joins the spring portions together. Each of the spring portions extends in a cantilever fashion from the joining portion. Each of the spring portions is provided with a regulated portion and a contact point contactable with the mating terminal. The regulated portion is located between the contact point and the joining portion. The spring portion is located outward of the accommodation portion in a direction perpendicular to the predetermined direction. The regulation member has a regulating portion. The regulating portion is located inside the accommodation portion and regulates an excessive movement of the regulated portion of the spring portion which is directed inward of the accommodation portion.

## Description

### BACKGROUND OF THE INVENTION

This invention relates to a connector, particularly, to a connector which is provided with a terminal having spring portions.

JPA2017-208265 (Patent Document 1) discloses a connector provided with a slotted terminal.

As shown in Fig. 12, a slotted terminal 90 of the connector disclosed in Patent Document 1 is provided with a plurality of resilient pieces or spring portions 910. Each of the resilient pieces 910 is coupled to a base portion 920 at an end thereof and extends from the base portion 920 in a predetermined direction.

A slotted-type terminal is also employed in a charging connector. The charging connector is heavy, and careless handling of the charging connector may cause falling of the charging connector or collision of the charging connector to surrounding things. A strong impact caused by the falling, etc. might bring the spring portions of the terminal of the charging connector down inward to cause plastic deformation of them.

### SUMMARY OF THE INVENTION

It is an object of the present invention to provide a connector provided with a terminal which can prevent spring portions thereof from being deformed by impact.

One aspect of the present invention provides a connector which comprises a terminal and a regulation member. The connector has an accommodation portion which accommodates a mating terminal along a predetermined direction. The terminal has a plurality of spring portions and a joining portion which joins the spring portions together. Each of the spring portions extends in a cantilever fashion from the joining portion. Each of the spring portions is provided with a regulated portion and a contact point contactable with a mating terminal. The regulated portion is located between the contact point and the joining portion. The spring portion is located outward of the accommodation portion in a direction perpendicular to the predetermined direction. The regulation member has a regulating portion. The regulating portion is located inside the accommodation portion and regulates an excessive movement of the regulated portion of the spring portion which is directed inward of the accommodation portion.

In the connector of the above-mentioned aspect, the spring portion of the terminal is located outward of the accommodation portion in the direction perpendicular to the predetermined direction. On the other hand, the regulating portion of the regulation member is located inside the accommodation portion. Accordingly, the excessive movement of the regulated portion of the spring portion which is directed inward of the accommodation portion is regulated by the regulating portion, and plastic deformation of the spring portion can be prevented.

An appreciation of the objectives of the present invention and a more complete understanding of its structure may be had by studying the following description of the preferred embodiment and by referring to the accompanying drawings.

### BRIEF DESCRIPTION OF THE DRAWINGS

Fig. 1 is a perspective view showing a connector according to an embodiment of the present invention.
Fig. 2 is a front view showing the connector of Fig. 1. One of terminals and the vicinity thereof are shown in an enlarged fashion.
Fig. 3 is a cross-sectional view showing a part of the connector of Fig. 2, taken along line A-A.
Fig. 4 is a perspective view showing one of the terminals included in the connector of Fig. 1 and one of shock guard pins included in the connector of Fig. 1. The shock guard pin is held by the terminal.
Fig. 5 is a perspective view showing the terminal and the shock guard pin of Fig. 4. The shock guard pin is detached from the terminal.
Fig. 6 is a front view showing the terminal and the shock guard pin of Fig. 4.
Fig. 7 is a cross-sectional view showing the terminal and the shock guard pin of Fig. 6, taken along line B-B. One of regulating portions and one of regulated portions are shown in an enlarged fashion.
Fig. 8 is a cross-sectional view showing the terminal and the shock guard pin of Fig. 7, taken along line C-C.
Fig. 9 is a perspective view showing a modified example of the terminal and the shock guard pin shown in Fig. 5..
Fig. 10 is a cross-sectional view showing the terminal and the shock guard pin of Fig. 9. The shock guard pin is held by the terminal. The sectional position corresponds to that of line B-B of Fig. 6. One of regulating portions and one of regulated portions are shown in an enlarged fashion.
Fig. 11 is a cross-sectional view showing the terminal and the shock guard pin of Fig. 10, taken along line D-D.
Fig. 12 is a perspective view showing a slotted terminal included in a connector disclosed in Patent Document 1.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION

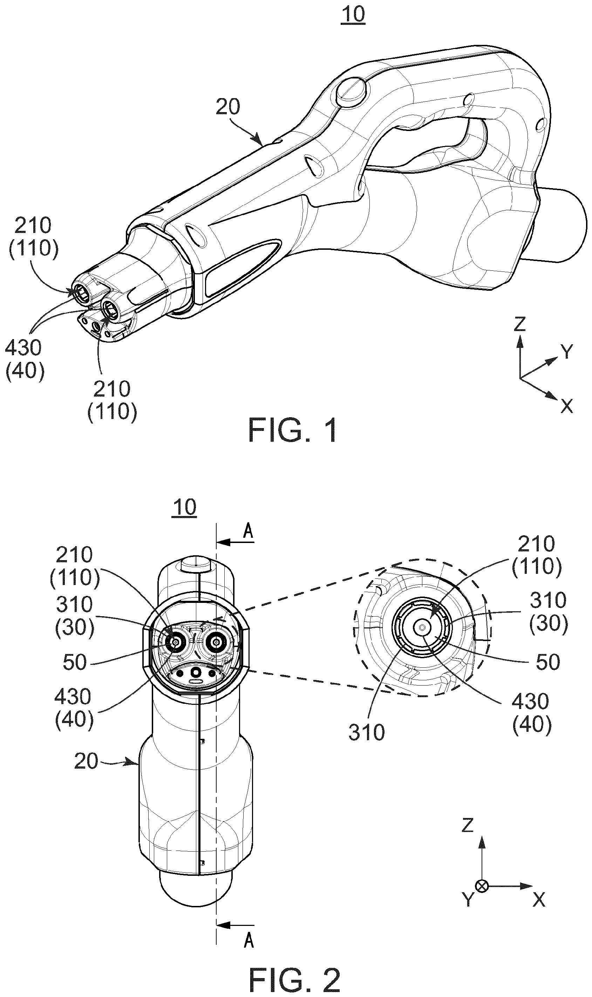

Referring to Fig. 1, a connector 10 according to an embodiment of the present invention is a charging connector. The connector 10 is mateable with a mating connector (not shown), which is provided with a mating terminal (not shown), in a front-rear direction (a predetermined direction). In the present embodiment, the front-rear direction is a Y-direction. A negative Y-direction is directed forward while a positive Y-direction is directed rearward.

Referring to Fig. 2, the connector 10 according to the present embodiment is provided with a housing 20, two terminals 30, two shock guard pins 40 and two regulation members 50. The two terminals 30 are same in structure. Moreover, the two shock guard pins 40 are same in structure. Furthermore, the two regulation members 50 are same in structure. The shock guard pins 40 correspond to the terminals 30, respectively. Also, the regulation members 50 correspond to the terminals 30, respectively. However, the present invention is not limited thereto. In the present invention, the terminal 30 should be at least one in number. In addition, the shock guard pins 40 are not essential in the present invention. Hereinafter, the description will be made about one of the terminals 30, the shock guard pin 40 corresponding to the terminal 30 and the regulation member 50 corresponding to the terminal 30.

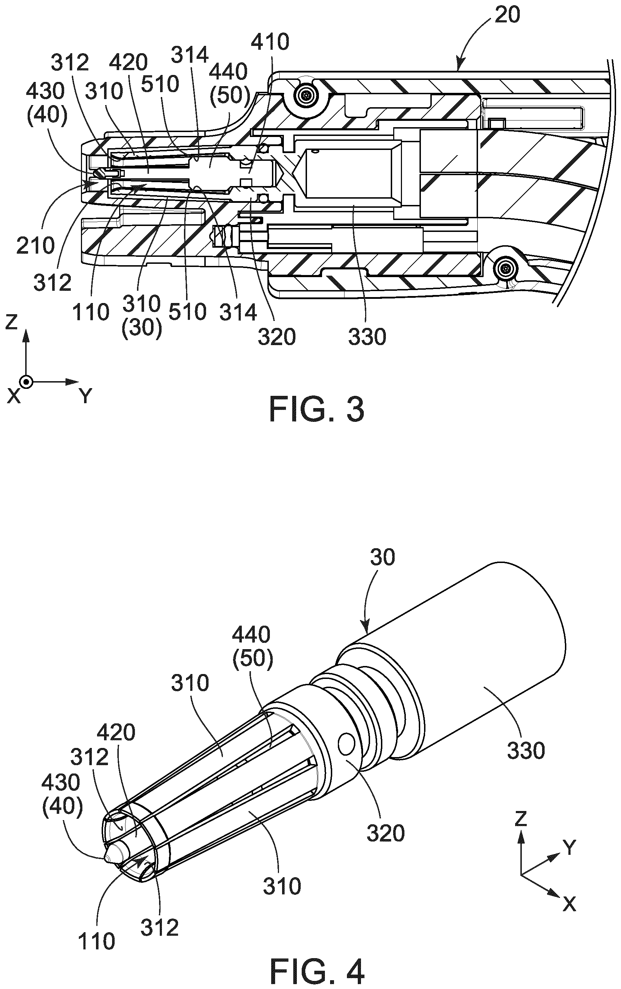

Referring to Fig. 3, the housing 20 has a terminal accommodation portion 210 which opens in the front-rear direction. In the present embodiment, the terminal accommodation portion 210 opens forward. The terminal 30 is arranged in the terminal accommodation portion 210 and held by the housing 20.

As shown in Fig. 3, in the present embodiment, the terminal accommodation portion 210 forms a mating terminal accommodation portion (an accommodation portion) 110 in part. In other words, the terminal accommodation portion 210 includes the mating terminal accommodation portion 110. The mating terminal accommodation portion 110 accommodates the mating terminal (not shown) at least in part in the front-rear direction when the connector 10 is mated with the mating connector (not shown). However, the present invention is not limited thereto. In the present invention, the mating terminal accommodation portion 110 may not be a part of the terminal accommodation portion 210. In detail, the housing 20 is not essential in the present invention, and the terminal 30 may not be accommodated in the terminal accommodation portion 210. Even in such a case, the connector 10 has the mating terminal accommodation portion 110 which accommodates the mating terminal along the front-rear direction.

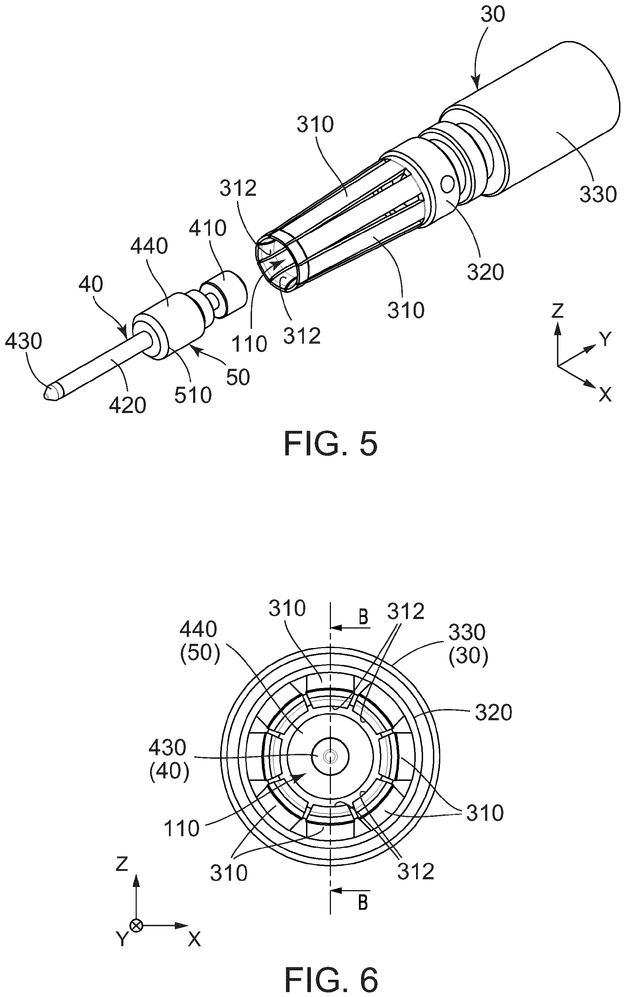

Referring to Fig. 5, the terminal 30 has a plurality of spring portions 310, a joining portion 320 and a connection portion 330.

As understood from Figs. 3 and 4, the connection portion 330 is formed with a plurality of cylinder portions which have a common central axis. The connection portion 330 includes a part connected to a cable (not shown) and a part held by the housing 20. The joining portion 320 having a cylindrical shape is located forward of the connection portion 330 and joins the spring portions 310 to one another. Each of the spring portions 310 extends forward from a front end of the joining portion 320 in a cantilever fashion.

As shown in Fig. 6, the spring portions 310 are arranged in a circle when viewed from a front of them. In the present embodiment, the spring portions 310 are eight in number. However, the present invention is not limited thereto. The spring portions 310 should be at least two in number.

As understood from Fig. 4 or 5, in the present embodiment, the spring portions 310, the joining portion 320 and the connection portion 330 are integrally formed. In other words, in the present embodiment, the terminal 30 is made from a single member. In the present embodiment, the terminal 30 is made of pure copper. The terminal 30 made of pure copper is suitable for a large current. On the other hand, in order to ensure contact reliability with the mating terminal (not shown), the terminal 30 made of pure copper must have the spring portions 310 each of which has a length longer than that of other terminals made of materials other than pure copper. Accordingly, the terminal 30 made of pure copper has a high possibility of plastic deformation in comparison with the other terminals made of material other than pure copper. The present invention is especially effective for a connector such as the connector 10 provided with the terminals 30 having the high possibility of plastic deformation.

As understood from Figs. 3 to 5, the shock guard pin 40 is attached to the terminal 30.

As shown in Fig. 5, the shock guard pin 40 has a held portion 410, a pin portion 420 and an insulating end portion 430. The held portion 410 is held by the terminal 30. The held portion 410 is formed of a plurality of cylindrical parts which have a common central axis. The pin portion 420 is formed of a cylinder having a central axis common with that of the held portion 410 and extends forward from the held portion 410. The pin portion 420 has an external diameter smaller than that of each of the cylindrical parts of the held portion 410. In the present embodiment, the pin portion 420 is formed integrally with the held portion 410. The held portion 410 and the pin portion 420 are made of metal, for example. The insulating end portion 430 is made of a material different from those of the held portion 410 and the pin portion 420 and attached on a tip of the pin portion 420. In the present embodiment, the insulating end portion 430 is made of insulating resin.

As shown in Fig. 3, the insulating end portion 430 of the shock guard pin 40 is located inside the terminal accommodation portion 210. In addition, the insulating end portion 430 is located forward of free ends of the spring portions 310 of the terminal 30 in the front-rear direction. In other words, the insulating end portion 430 is farther from the joining portion 320 than the free ends of the spring portions 310 of the terminal 30 are. With this structure, the shock guard pin 40 prevents a user's finger from entering an opening of the terminal accommodation portion 210 and thereby preventing the user's finger from being brought into contact with the spring portions 310 of the terminal 30.

As shown in Fig. 5, in the present embodiment, the shock guard pin 40 further has a thick portion 440. The thick portion 440 serves as the regulation member 50. In other words, in the present embodiment, the regulation member 50 is formed integrally with the shock guard pin 40, so that the shock guard pin 40 serves as the regulation member 50. It is noted that, as mentioned before, the shock guard pin 40 is not essential in the present invention. Accordingly, in a case that the terminal 30 does not have the shock guard pin 40, the regulation member 50 should be attached to the terminal 30 as a single member other than the terminal 30.

Referring to Figs. 6 to 8, each of the spring portions 310 is provided with a contact point 312 and a regulated portion 314. The contact point 312 is located near the free end of the spring portion 310. The regulated portion 314 is located between the contact point 312 and the joining portion 320. The contact point 312 is brought into contact with the mating terminal (not shown) when the connector 10 is mated with the mating connector (not shown). When the connector 10 is not mated with the mating connector (not shown), the regulated portion 314 may be brought into contact with the regulation members 50 if the spring portion 310 is deformed.

As understood from Figs. 3, 6 and 7, the spring portions 310 of the terminal 30 are located outward of the mating terminal accommodation portion 110 in directions perpendicular to the front-rear direction. In the present embodiment, the spring portions 310 are arranged so that they surround the mating terminal accommodation portion 110. In other words, in the present embodiment, the spring portions 310 define the mating terminal accommodation portion 110 in part. At any rate, the mating terminal accommodation portion 110 is located inward of the spring portions 310 in the directions perpendicular to the front-rear direction. Accordingly, when the connector 10 is mated with the mating connector (not shown), the spring portions 310 of the terminal 30 are brought into contact with the mating terminal (not shown) from outside of the mating terminal in the directions perpendicular to the front-rear direction.

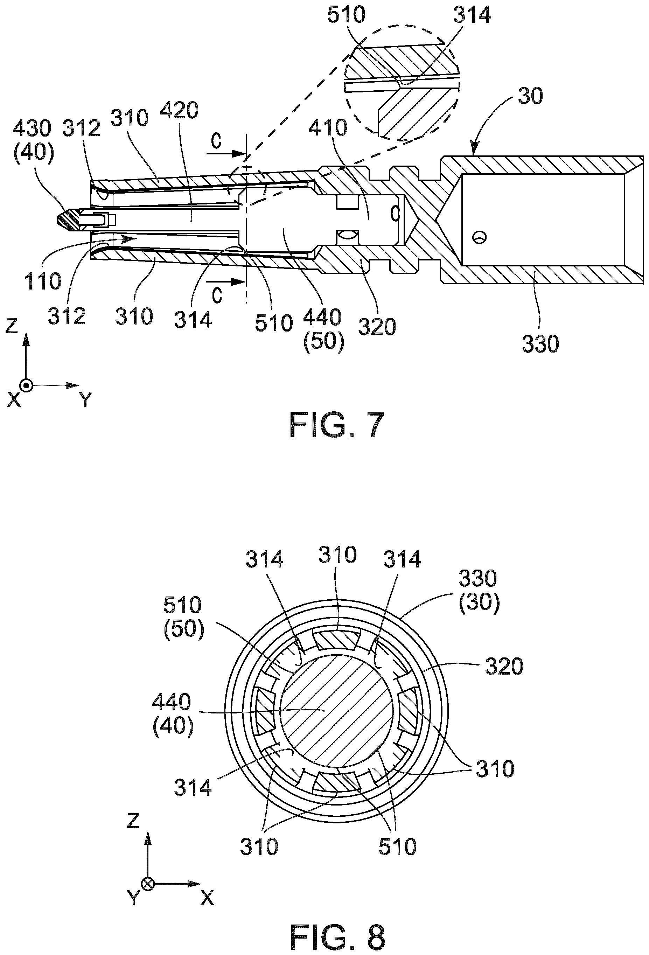

As understood from Fig. 7, when the spring portions 310 are deformed so that the free ends of the spring portions 310 are moved inward in the directions perpendicular to the front-rear direction, the regulated portions 314 are brought into abutment with a regulating portion 510 of the regulation members 50. Thus, the regulation member 50 has the regulating portion 510 with which the regulated portions 314 are brought into abutment.

As shown in Fig. 8, the regulating portion 510 of the regulation member 50 is located inside the mating terminal accommodation portion 110 of the connector 10 and faces all the spring portions 310 in the directions perpendicular to the front-rear direction. When the spring portions 310 are deformed inward in the directions perpendicular to the front-rear direction, the regulating portion 510 of the regulation member 50 is brought into abutment with the regulated portions 314 of the spring portions 310. In this manner, the regulating portion 510 regulates excessive movement of the regulated portions 314 of the spring portions 310 which is directed inward of the mating terminal accommodation portion 110. Thus, plastic deformation of the spring portions 310 is prevented.

Referring to Fig. 7, the description will be made about a position of the regulated portion 314 of the spring portion 310. In order to prevent the inward plastic deformation of each spring portion 310 in the direction perpendicular to the front-rear direction, it is preferable that the regulated portion 314 is located near the free end of the spring portion 310 in the front-rear direction. On the other hand, in order not to prevent the mating terminal (not shown) from entering, it is preferable that a position of the regulation member 50 is far from the free end of the spring portion 310 in the front-rear direction. As a result of considering these points, the regulated portion 314 is provided on the spring portion 310 except for a predetermined region set on the spring portion 310. In detail, the spring portion 310 has the predetermined region which extends toward the free end of the spring portion 310 from the joining portion 320 and occupies at least 10% of a total length of the spring portion 310. Preferably, the predetermined region of the spring portion 310 occupies at least 20% of the total length of the spring portion 310. The regulated portion 314 is provided on the spring portion 310 except for the predetermined region of the spring portion 310. In other words, the regulated portion 314 is provided on the spring portion 310 so that it is situated forward of the predetermined region in the front-rear direction. With this structure, the plastic deformation of the spring portion 310 is reliably prevented without obstructing mating operation between the connector 10 and the mating connector (not shown).

Although the specific explanation about the present invention is made above with reference to concrete embodiments, the present invention is not limited thereto but susceptible of various modifications and alternative forms without departing from the spirit of the invention.

For example, the present invention is applicable to not only the charging connector but connectors other than the charging connector.

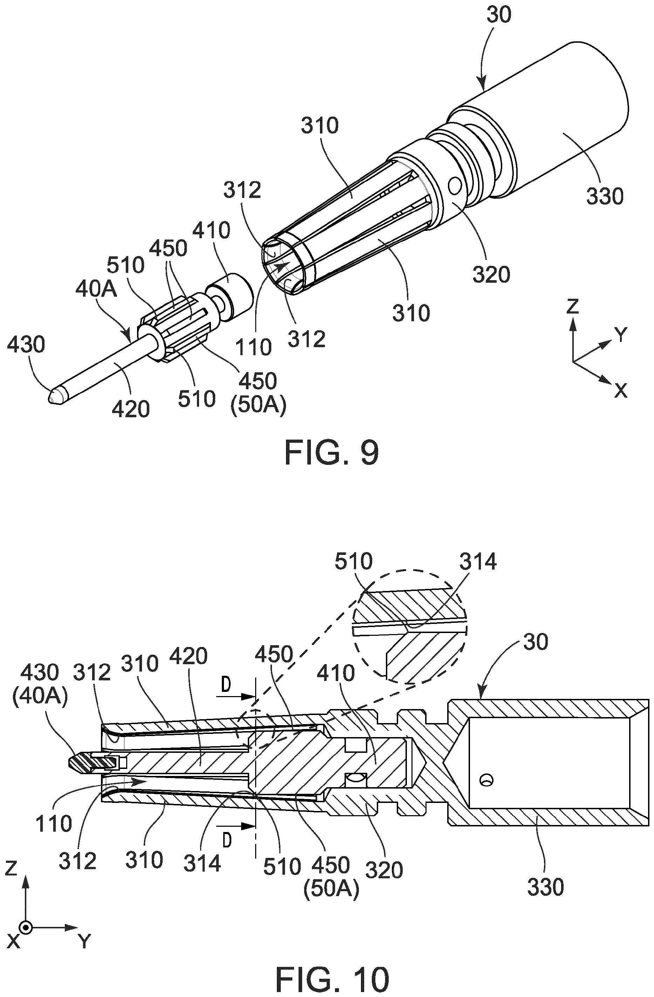

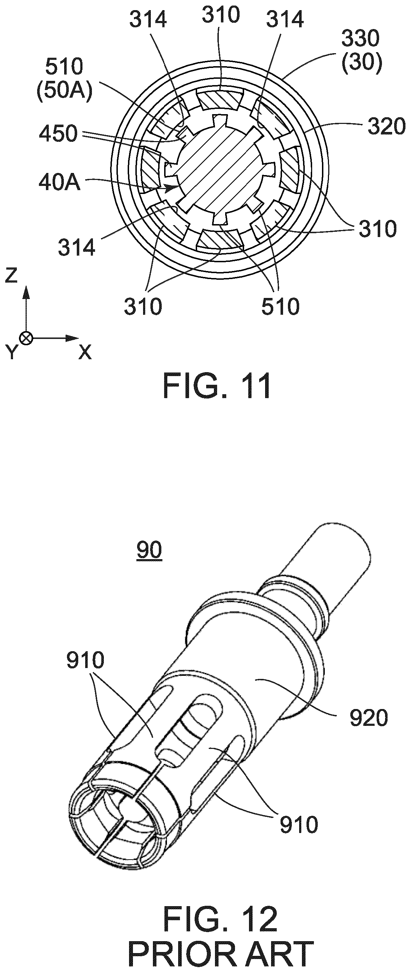

In the present invention, the shape of the regulation member 50 is not limited to the cylindrical shape, but it may be any shape. For example, as shown in Fig. 9, a regulation member 50A formed of a plurality of elongated ridge portions 450 may be used. The regulation member 50A is formed integrally with a shock guard pin 40A. As understood from Figs. 10 and 11, the elongated ridge portions 450 correspond to the spring portions 310, respectively. Each of the elongated ridge portions 450 has a regulating portion 510. The regulating portion 510 regulates excessive movement of the regulated portion 314 of the spring portion 310 which is directed inward of the mating terminal accommodation portion 110 and prevents plastic deformation of the spring portion 310. It is noted that the shock guard pin 40 is simpler in shape and easier in manufacture than the shock guard pin 40A.

In the aforementioned embodiment, the regulating portion 510 of the regulation member 50 is fixed in position in the front-rear direction. However, in the present invention, the regulation member 50 may be provided so that it is movable in the front-rear direction. For example, by combining the regulation member 50 with a spring member, the position of the regulation member 50 in the front-rear direction may be changed according to an inserted length of the mating terminal (not shown) inserted in the mating terminal accommodation portion 110. The use of the regulation member 50 which is movable allows the position of the regulated portion 314 to be closer to the free end of the spring portion 310, so that the plastic deformation of the spring portion 310 can be reliably prevented.

In the present invention, the shape of the terminal 30 is not limited to that of the aforementioned embodiment but may be any shape. For example, the joining portion 320 of the terminal 30 is not limited to the cylinder but may be a polygonal tube. Moreover, the joining portion 320 may have a slit along the front-rear direction. The joining portion 320 having the slit may be formed by bending a metal sheet, for example. In addition, each regulated portion 314 may be a protruding portion which is formed by bending the spring portion 310 so that it protrudes toward the mating terminal accommodation portion 110.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. A connector comprising a terminal and a regulation member, wherein:
the connector has an accommodation portion which accommodates a mating terminal along a predetermined direction;
the terminal has a plurality of spring portions and a joining portion which joins the spring portions together;
each of the spring portions extends in a cantilever fashion from the joining portion;
each of the spring portions is provided with a regulated portion and a contact point contactable with the mating terminal;
the regulated portion is located between the contact point and the joining portion;
the spring portion is located outward of the accommodation portion in a direction perpendicular to the predetermined direction;
the regulation member has a regulating portion; and
the regulating portion is located inside the accommodation portion and regulates an excessive movement of the regulated portion of the spring portion which is directed inward of the accommodation portion.

2. The connector as recited in claim 1, wherein:
the connector further comprises a housing;
the housing has a terminal accommodation portion which opens in the predetermined direction; and
the terminal is arranged in the terminal accommodation portion and held by the housing.

3. The connector as recited in claim 2, wherein:
the connector comprises a shock guard pin;
the shock guard pin has an insulating end portion; and
in the terminal accommodation portion, the insulating end portion is farther from the joining portion of the terminal than a free end of the spring portion of the terminal is.

4. The connector as recited in claim 3, wherein:
the regulating portion is provided on the shock guard pin; and
the shock guard pin serves as the regulation member.

5. The connector as recited as any one of claims 1 to 4, wherein:
the spring portion has a predetermined region which extends from the joining portion toward a free end of the spring portion and occupies at least 10% of a total length of the spring portion; and
the regulated portion is provided on the spring portion except for the predetermined region of the spring portion.

6. The connector as recited as claim 5, wherein the predetermined region occupies at least 20% of the total length of the spring portion.

7. The connector as recited as any one of claims 1 to 7, wherein the regulating portion is fixed in position in the predetermined direction.
